# EUROPÄISCHE PATENTSCHRIFT

(11) **EP 0 588 297 B1**
(45) Veröffentlichungstag und Bekanntmachung des Hinweises auf die Patenterteilung: **09.04.1997**
(21) Anmeldenummer: 93114742.5
(22) Anmeldetag: 14.09.1993
(51) Int. Cl.: G01G 11/08

(54) **Dosiervorrichtung**
Dosing device
Appareil de dosage

(30) Priorität: 16.09.1992 DE 4231017
(43) Veröffentlichungstag der Anmeldung: 23.03.1994
(73) Patentinhaber: Pfister GmbH, 86165 Augsburg (DE)
(72) Erfinder: Häfner, Hans-Wilhelm, D-86551 Aichach (DE)
(74) Vertreter: Fiener, Josef

(56) Entgegenhaltungen:
- EP-A- 0 471 234
- WO-A-92/03707
- GB-A- 2 127 566
- PATENT ABSTRACTS OF JAPAN vol. 6, no. 84 (P-117)(962) 22. Mai 1982 & JP-A-57 022 517

## Beschreibung

Die Erfindung betrifft eine Dosiervorrichtung zum kontinuierlichen gravimetrischen Dosieren von schüttfähigem Gut gemäß den oberbegrifflichen Merkmalen des Patentanspruchs 1.

Eine derartige Dosiervorrichtung ist beispielsweise aus der DE-A-32 17 406 oder der DE-A-32 35 039 bekannt. Hierbei ist ein Rotor vorgesehen, der Fördertaschen in Form von Kammern oder Zellen aufweist, die durch im wesentlichen radial verlaufende Mitnehmerstege unterteilt sind. Die Kammern oder Zellen weisen hierbei an den Einlaß- bzw. Auslaßquerschnitt angepaßte Volumina auf, wobei die oberen Begrenzungswände der Kammern oder Zellen unmittelbar an der Beschickungsöffnung und der Entleerungsöffnung vorbeigeführt werden, sowie die Kammern oder Zellen durch ein pneumatisches Fördersystem entleert werden.

Obwohl sich diese Vorrichtung insbesondere zur Dosierung von Kohlenstaub und aufgrund des pneumatischen Fördersystems auch für leicht klebende Schüttgüter eignet, kann es bei grobkörnigem Schüttgut insbesondere bei der Beschickung zu Problemen kommen, da die oberen Begrenzungswände der Kammern oder Zellen knapp an dem Zuführstutzen vorbeilaufen, so daß es bei grobkörnigem Schüttgut zu Abscherungen zwischen dem stationären Zuführstutzen und den umlaufenden Begrenzungswänden der Zellen oder Kammern kommen kann. Bei sehr großkörnigem Schüttgut, wie beispielsweise Schotter, kann es sogar zu Klemmerscheinungen zwischen dem umlaufenden Rotor und dem stationären Zuführstutzen kommen, so daß hierdurch Störungen verursacht werden können. Zudem ist nachteilig, daß gegenüber der Gesamtfläche des Rotors die Kammern oder Zellen einen relativ geringen Querschnitt einnehmen, so daß hierdurch das Mitnahmevolumen des Rotors relativ gering ist, sofern nicht ein besonders großer Rotordurchmesser oder höhere Umlaufgeschwindigkeiten des Rotors vorgesehen sind. Dem steht jedoch entgegen, daß die Schüttgüter im allgemeinen ein aggressives Verschleißverhalten aufweisen, so daß eine möglichst geringe Umlaufgeschwindigkeit angestrebt wird. Auch soll der Dosierrotor zum Einbau in Förderanlagen einen möglichst geringen Bauraum und damit Durchmesser einnehmen.

Demzufolge liegt der Erfindung die Aufgabe zugrunde, eine gattungsgemäße Dosiervorrichtung hinsichtlich des möglichen Durchsatzes und des Herstellungsaufwandes zu verbessern, sowie die Einsatzfähigkeit für grobkörniges Schüttgut zu ermöglichen.

Diese Aufgabe wird gelöst mit einer Dosiervorrichtung gemäß den Merkmalen des Patentanspruchs 1.

Durch die sternförmig verlaufende Ausbildung der Mitnehmerstege des Rotors ergibt sich eine vereinfachte Bauweise des Rotors, da keine gegeneinander vollständig abgeschlossenen Kammern oder Zellen mehr hergestellt werden müssen. Da zudem die Mitnehmerstege lediglich eine Teilhöhe des Gehäuses einnehmen, vorzugsweise nur ca. 20 % der Gehäuse-Innenhöhe, ergibt sich eine beträchtliche Materialeinsparung. Außerdem kann der Rotor in Art einer Felge durch stabförmiges Halbzeug für die sternförmig verlaufenden Mitnehmerstege in einfacher Weise hergestellt werden, so daß die ansonsten für den Rotor übliche Gußkonstruktion entfällt. Da die einzelnen Mitnahmeräume zwischen den Mitnehmerstegen miteinander verbunden sind, ergibt sich eine höhere Fördermenge und somit ein entsprechend großer Durchsatz der Dosiervorrichtung. Da weiterhin der Zuführstutzen in Richtung zu den Mitnehmerstegen in das Gehäuse hineinragt, wird verhindert, daß sich Schüttgut zwischen umlaufenden Teilen des Rotors und des stationären Zuführstutzens klemmen kann und die Umlaufbewegung des Rotors hemmen könnte. Somit eignet sich diese Dosiervorrichtung auch für grobkörniges Schüttgut, wie beispielsweise Schotter oder ähnliches großklumpiges Fördergut.

In bevorzugter Ausführung ist der Zuführstutzen mit seiner entgegen die Förderrichtung weisenden Hälfte bis nahe an die Umlaufebene der Mitnehmerstege geführt, so daß diese Hälfte als Abstreifer zu der benachbart gelegenen Entleeröffnung dienen kann. Die in Förderrichtung weisende Hälfte des Zuführstutzens ist hierbei bevorzugt schräg angeschnitten und bildet somit eine Auslaßöffnung, so daß im Zusammenwirken mit den darunter vorbeilaufenden Mitnehmerstegen des Rotors eine strangförmige Gutanhäufung erreicht wird und diese über die Meßstrecke bis zur Entleerungsöffnung über einen Winkel von etwa 270° geführt wird. Statt der vorstehend beschriebenen Ausbildung des unteren Endes des Zuführstutzens können auch tangential zur Förderrichtung ausgerichtete seitliche Lappen vorgesehen sein, die sich bis zur Umlaufebene der Mitnehmerstege erstrecken, so daß hierdurch ebenfalls eine strangförmige Anhäufung des Schüttgutes erreicht wird. In zweckmäßiger Weiterbildung sind die Mitnehmerstege an ihrem radial äußeren Ende mit einem Außenring verbunden, der höher als die Mitnehmerstege sein kann, so daß hierdurch eine äußere Begrenzung gegen Abfließen des Schüttgutes nach außen hin gegeben ist. Bei dieser Ausbildung ist die zentrale Rotornabe ebenfalls höher ausgebildet, so daß der Zuführstutzen zwischen dem Außenring und der Rotornabe eingepaßt ist und somit bei der Umlaufbewegung ein nach außen hin und nach innen hin begrenzter Schüttgutstrang geformt wird.

Weiterhin ist von Vorteil, wenn der Außenring des Rotors einen geringfügig kleineren Durchmesser als der Innendurchmesser des Gehäuses aufweist, wodurch ein Umfangsspalt gebildet ist, in dem Hilfsmitnehmer, bevorzugt eine einstückige Erweiterung der Mitnehmerstege vorgesehen sind, so daß ggfs. über den Außenring austretendes Schüttgut mit zur Entleerungsöffnung gefördert wird. Durch diese Konstruktion läßt sich ein weitgehend reibungsarmer Betrieb der Dosiervorrichtung erreichen, ohne die Meßgenauigkeit zu beeinträchtigen.

Weitere vorteilhafte Ausgestaltungen sind Gegenstand der abhängigen Ansprüche. Nachfolgend wird ein Ausführungsbeispiel anhand der Zeichnung näher erläutert und beschrieben. Es zeigen:
- Fig. 1: eine perspektivische Ansicht einer Dosiervorrichtung;
- Fig. 2: eine Seitenansicht der Dosiervorrichtung;
- Fig. 3: eine Draufsicht auf die Dosiervorrichtung;
- Fig. 4: eine Schnittdarstellung entlang der Schnittlinie A-A in Fig. 3; und
- Fig. 5: eine Schnittdarstellung entlang der Schnittlinie B-B in Fig. 3.

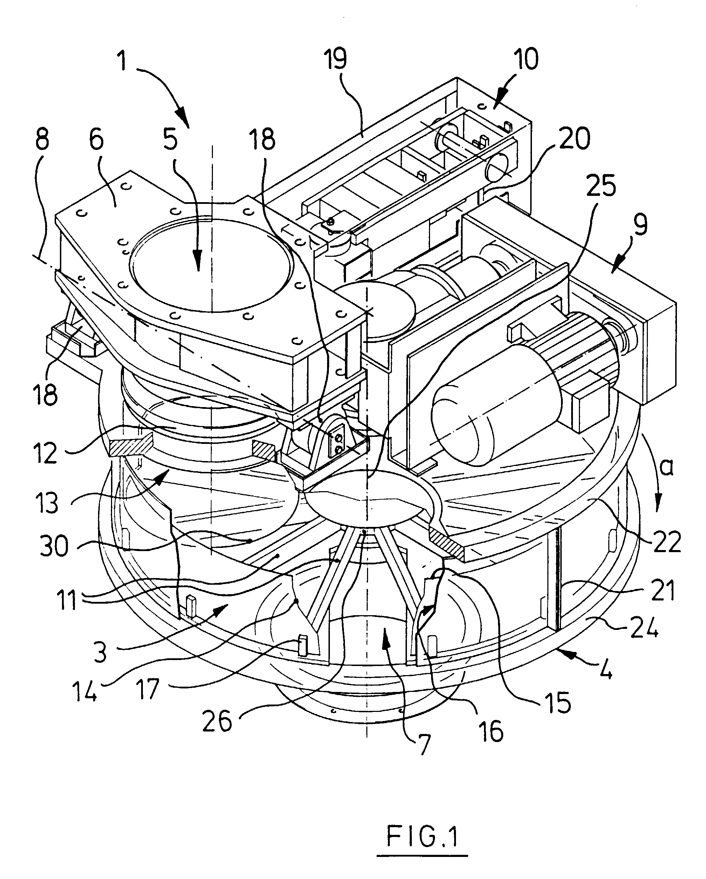

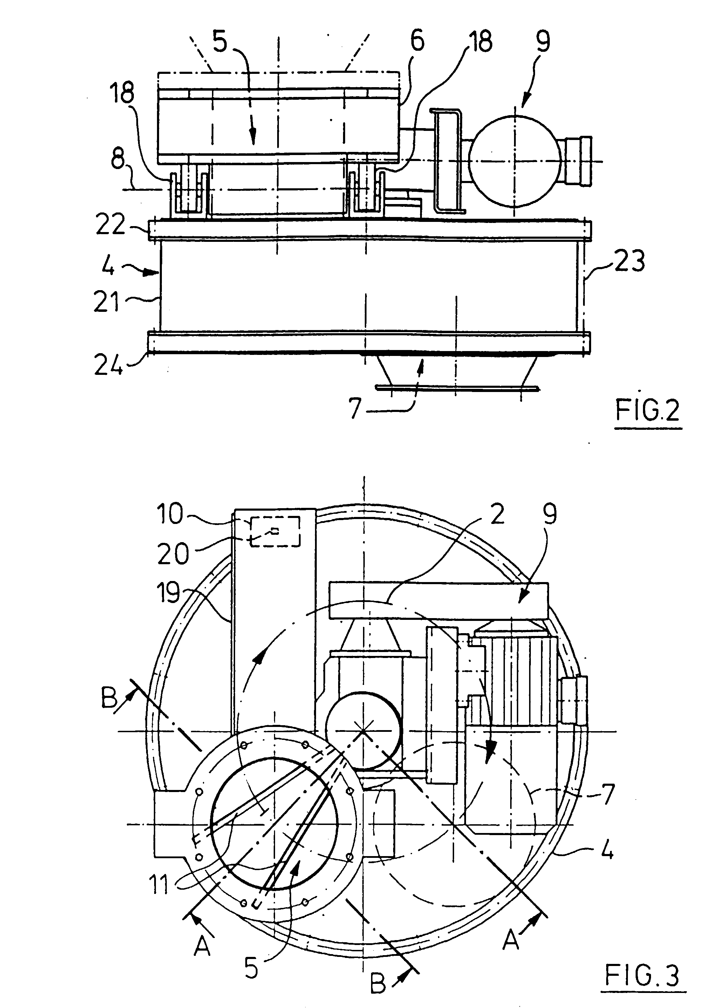

In Fig. 1 ist eine Dosiervorrichtung 1 dargestellt, die im wesentlichen aus einem Rotor 3 besteht, der in einem Gehäuse 4 umläuft, das bis auf eine Beschickungsöffnung 5 und eine Entleerungsöffnung 7 vollständig geschlossen ist. Die Beschickungsöffnung 5 und die Entleerungsöffnung 7 sind hierbei benachbart zueinander angeordnet, so daß sich eine möglichst lange Meßstrecke 2 (vgl. Fig. 3) über hier etwa 270° ergibt.

An der Beschickungsöffnung 5 ist ein Schieber 6 vorgesehen, der aus einem Bunker oder einem Trichter zugeführtes Schüttgut reguliert. Das Gehäuse des Schiebers 6 ist hierbei stationär angeordnet, beispielsweise direkt an der Unterseite eines Schüttgutsilos. Unterhalb des Schiebers 6 sind zur Bildung einer Schwenkachse 8, um die das Gehäuse 4 unter Gutbelastung verschwenken kann, zwei Schwenklager 18 vorgesehen. Diese Schwenkachse 8 verläuft bevorzugt durch -in Draufsicht gesehen-die Mitte der oberen Beschickungsöffnung 5 und der unteren Entleerungsöffnung 7. Zum Antrieb des Rotors 3 ist eine Antriebsvorrichtung 9 vorgesehen, die hier beispielsweise aus einem nicht näher bezeichneten Elektromotor, einem Riementrieb und einem Kegelradgetriebe besteht, dessen Ausgang in eine vertikale Antriebsachse 25 für den Rotor 3 mündet. Die Antriebsvorrichtung 9 ist hierbei direkt auf das Gehäuse 4 montiert, so daß es Schwenkbewegungen um die Schwenkachse 8 mitvollziehen kann. Bei der Schwenkbewegung um die Schwenkachse 8, wie sie durch die Gutzufuhr und die Förderung entlang der Meßstrecke 2 verursacht werden, stützt sich das Gehäuse 4 auf eine stationär angeordnete Kraftmeßvorrichtung 10 ab, die hier beispielsweise über einen Zuganker 20 mit dem Gehäuse 4 verbunden ist. In diesem Ausführungsbeispiel ist die Kraftmeßvorrichtung 10 an einem Rahmen 19 befestigt, der mit dem ebenfalls stationär angeordneten Gehäuse des Schiebers 6 verbunden ist. Es kann jedoch auch ein gesondertes Abstützgerüst für die Kraftmeßvorrichtung 10 vorgesehen sein. Als Kraftmeßvorrichtung 10 können verschiedene Arten von Kraftmeßzellen Verwendung finden, bevorzugt werden jedoch weglos arbeitende Meßgeber, wie Dehnmeßstreifen, Scherkraftgeber oder dergleichen verwendet. Der vorstehend beschriebene Aufbau entspricht somit im wesentlichen der DE 32 17 406 A1, wobei das jeweilige Gewicht des über die Meßstrecke 2 geförderten Gutstromes erfaßt wird und das Produkt aus Momentlast und Fördergeschwindigkeit zur Ermittlung des Durchsatzes erfaßt wird. Zur Änderung des Durchsatzes oder zur Einstellung einer Sollmenge wird über eine nicht näher dargestellte, an sich bekannte Regelvorrichtung die Drehzahl der Antriebsvorrichtung 9 und damit des Rotors 3 nachgeregelt.

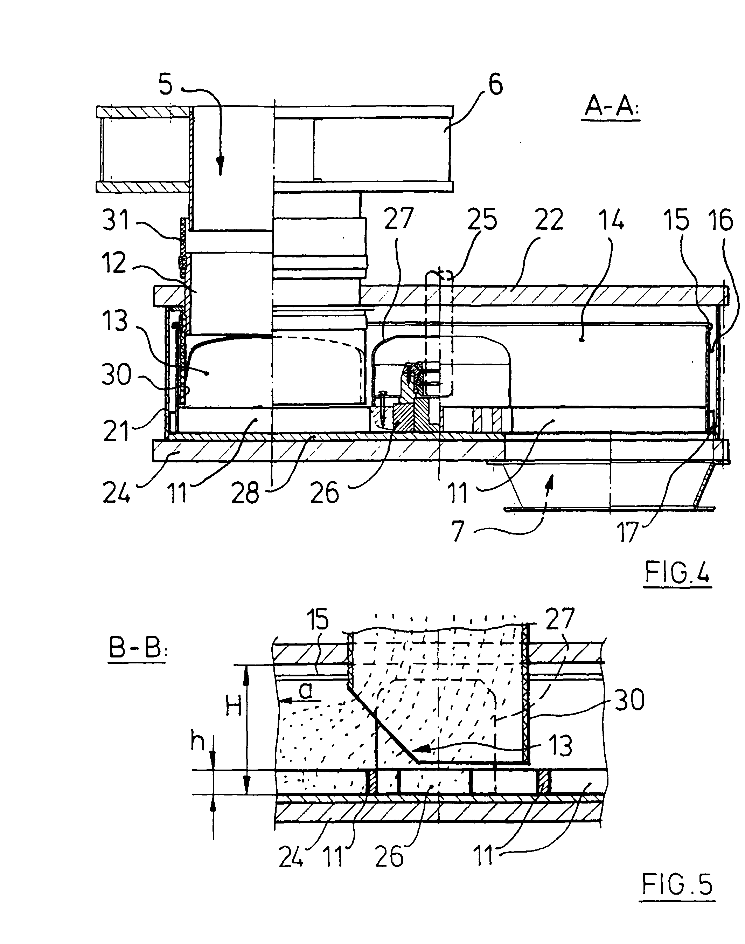

Von wesentlicher Bedeutung ist die Ausbildung des Rotors 3 in Form der sternförmig verlaufenden Mitnehmerstege 11, die lediglich eine Teilhöhe h (vgl. Fig. 5) der Innenhöhe H des Gehäuses 4 einnehmen. Durch die obere Gehäusewand 22 des Gehäuses 4 ist ein Zuführstutzen 12 hindurchgeführt, der eine untere Auslaßöffnung 13 aufweist, die bevorzugt durch einen schrägen Anschnitt des Zuführstutzens 12 gebildet ist. Die sternförmig angeordneten Mitnehmerstege 11 des Rotors 3 sind hier durch einen Außenring 14 miteinander verbunden, so daß sich eine hohe Stabilität des Rotors 3 ergibt. Zudem bewirkt der außen bis nahezu zur oberen Gehäusewand 22 hochgezogene Außenring 14, daß das durch die Beschickungsöffnung 5 im Zuführstutzen 12 zugeführte Schüttgut nicht nach außen hin abwandern kann. Der obere Rand 15 des Außenrings 14 ist in bevorzugter Ausgestaltung nach außen hin umgebördelt, so daß dieser mit geringem Spiel bezüglich des Gehäusemantels 21 umläuft. Zwischen dem Außenring 14 und dem Gehäusemantel 21 wird hierbei ein Umfangsspalt 16 gebildet, in dem sich ggfs. feine Partikel oder Staub des Schüttgutes ansammeln können, um mittels Hilfsmitnehmern 17 zur Entleerungsöffnung 7 mittransportiert zu werden. Die Hilfsmitnehmer 17 sind bevorzugt durch die äußeren Enden der Mitnehmerstege 11 gebildet, indem beispielsweise der Außenring 14 nur auf die Mitnehmerstege 11 aufgesetzt ist. Es sei darauf hingewiesen, daß die Entleerungsöffnung 7 in radialer Richtung über den Außenrand 14 hinausragt und somit mit dem Umfangsspalt 16 in Verbindung steht, so daß auch in dem Umfangsspalt 16 befindliches Gut an der Entleerungsöffnung 7 nach unten herausfällt und somit hinsichtlich der Momentanlast an der Meßstrecke 2 miterfaßt wird.

In Fig. 2 ist eine Seitenansicht der Dosiervorrichtung 1 gezeigt, wobei insbesondere der Verlauf der durch die Schwenklager 18 gebildeten Schwenkachse 8 ersichtlich ist. Zudem ist der Aufbau des Gehäuses 4 mit einem Gehäusemantel 21, einer oberen Gehäusewand 22 und einer unteren Gehäusewand 24 dargestellt, die beispielsweise über Schraubverbindungen 23 mit der oberen Gehäusewand 22 verbunden ist. Zudem ist in Strich-Punkt-Linien oberhalb des Schiebers 6 und der Beschickungsöffnung 5 ein Zuführtrichter angedeutet.

In Fig. 3 ist eine Draufsicht auf die Dosiervorrichtung 1 dargestellt, wobei in der Beschickungsöffnung 5 die sternförmig verlaufenden Mitnehmerstege 11 erkennbar sind, die unter Antrieb durch die auf die Oberseite des Gehäuses 4 aufgesetzte Antriebsvorrichtung 9 das zugeführte Schüttgut entlang der Meßstrecke 2 um etwa 270° zu der Entleerungsöffnung 7 fördern. Hierdurch ergibt sich eine Momentanlast auf der hier oberen Hälfte der Dosiervorrichtung 1, so daß die mit Abstand von der Schwenkachse 8 angeordnete Kraftmeßvorrichtung 10 über den Zuganker 20 in die Zeichenebene hinein belastet wird. Die Kraftmeßvorrichtung 10 ist zur Erzielung einer möglichst großen Hebellänge am Umfang des Gehäuses 4 angeordnet, kann jedoch auch näher zur Schwenkachse 8 hin befestigt sein.

In Fig. 4 ist die Schnittdarstellung entlang der Schnittlinie A-A in Fig. 3 dargestellt. Neben den bereits beschriebenen Bauteilen der Dosiervorrichtung 1 ist hier eine Antriebswelle 25 in Strichlinien eingezeichnet, die von dem Kegelradgetriebe der Antriebsvorrichtung 9 ausgeht und mit einer Rotornabe 26 in Verbindung steht, an der die Mitnehmerstege 11 sternförmig angeordnet sind. Über der Rotornabe 26 befindet sich eine Rotornaben-Abdeckung 27, die eine ähnliche Höhe wie der Außenring 14 einnimmt, so daß der Zuführstutzen 12 zwischen diesem und der Rotornaben-Abdeckung 27 eingepaßt ist. Die Mitnehmerstege 11 laufen auf einer Schleißplatte 28 um, die auf der unteren Gehäusewand 24 befestigt ist. Das untere Endstück 30 des in das Gehäuse 4 hineinragenden Zuführstutzens 12 erstreckt sich in bevorzugter Ausführung mit seiner in Förderrichtung a (vgl. Fig. 1) weisenden Hälfte bis zu der Umlaufebene der Mitnehmerstege 11, während an seiner in Förderrichtung weisenden Hälfte eine schräg abgeschnittene Auslaßöffnung 13 vorgesehen ist, wie dies in Fig. 4 im Halbschnitt gesondert und in Fig. 5 in der Schnittdarstellung entlang der Schnittlinie B-B näher dargestellt ist, so daß sich beim Umlaufbetrieb der Dosiervorrichtung 1 eine strangförmige Gutanhäufung über den Mitnehmerstegen 11 ausbildet und diese zur Entleerungsöffnung 7 geführt wird. Diese strangförmige Anhäufung des Schüttgutes über den Mitnehmerstegen 11 ist auch in Fig. 5 dargestellt, woraus insbesondere die in Förderrichtung a weisende, schräg angeschnittene Auslaßöffnung 13 des Zuführstutzens 12 ersichtlich ist. Der Zuführstutzen 12 selbst ist in der oberen Gehausewand 22 befestigt und über ein elastisches Zwischenstück 31, beispielsweise einen Gummibalg, mit dem Stutzen des Schiebers 6 verbunden. Auch das Endstück 30 ist bevorzugt als elastisches Endstück ausgebildet, so daß dieses Endstück 30 des Zuführstutzens 12 gegenüber größeren Klumpen ggfs. nachgiebig gestaltet ist. Auch die in Fig. 5 dargestellte Ausbildung des unteren Endes des Zuführstutzens 12 mit der schräg angeschnittenen Auslaßöffnung 13 kann als auf dem Zuführstutzen 12 aufgestecktes Gummiteil hergestellt sein.

Es sei darauf hingewiesen, daß die Mitnehmerstege 11 des Rotors 3 neben der hier gezeichneten exakten radialen Ausrichtung auch leicht gekrümmt oder (in Förderrichtung) gewölbt ausgeführt sein können.

## Patentansprüche

1. Dosiervorrichtung (1) zum kontinuierlichen, gravimetrischen Dosieren von schüttfähigem Gut, wobei ein Gutstrom mit einem um eine vertikale Drehachse angetriebenen Rotor (3) unter Ermittlung der Momentanlast über eine Meßstrecke gefördert wird und der mit im wesentlichen radial und sternförmig verlaufend ausgebildeten Mitnehmerstegen (11) versehene Rotor (3) in einem Gehäuse (4) mit einem Zuführstutzen (12) an einer Beschickungsöffnung (5) und einer am Umfang versetzt angeordneten Entleerungsöffnung (7) umläuft, sowie mit einer Kraftmeßvorrichtung (10), die die Momentanlast des über den Rotor (3) geführten Gutstromes erfaßt, in dem sich das an einer Schwenkachse (8) gelagerte Gehäuse (4) auf die stationär angeordnete Kraftmeßvorrichtung (10) stützt,
dadurch gekennzeichnet, daß
die Mitnehmerstege (11) des Rotors (3) lediglich eine Teilhöhe (h) des Gehäuses (4) einnehmen, sowie der Zuführstutzen (12) in das Gehäuse (4) in Richtung zu den Mitnehmerstegen (11) hineinragt.

2. Dosiervorrichtung nach Anspruch 1,
dadurch gekennzeichnet, daß
der Zuführstutzen (12) mit seiner entgegen der Förderrichtung (a) weisenden Hälfte sich bis zu der Umlaufebene der Mitnehmerstege (11) erstreckt, während an seiner in Förderrichtung (a) weisenden Hälfte eine Auslaßöffnung (13) vorgesehen ist.

3. Dosiervorrichtung nach Anspruch 1 oder 2,
dadurch gekennzeichnet, daß
die Mitnehmerstege (11) an ihren radial äußeren Enden mit einem Außenring (14) verbunden sind.

4. Dosiervorrichtung nach Anspruch 3,
dadurch gekennzeichnet, daß
der Außenring (14) nur die Teilhöhe (h) der Mitnehmerstege (11) aufweist.

5. Dosiervorrichtung nach Anspruch 3,
dadurch gekennzeichnet, daß
der Außenring (14) höher als die Mitnehmerstege (11) ist.

6. Dosiervorrichtung nach Anspruch 5,
dadurch gekennzeichnet, daß
der Außenring (14) nahezu die Innenhöhe (H) des Gehäuses (4) aufweist.

7. Dosiervorrichtung nach einem der Ansprüche 3 bis 6,
dadurch gekennzeichnet, daß
der Außenring (14) mit geringem Spiel am Zuführstutzen (12) vorbeigeführt ist.

8. Dosiervorrichtung nach einem der Ansprüche 3 bis 7,
dadurch gekennzeichnet, daß
der Außenring (14) unter Bildung eines Umfangspaltes (16) einen geringfügig kleineren Durchmesser als den Durchmesser des Gehäuses (4) aufweist und der obere Rand (15) zur Abdeckung des Umfangspaltes (16) nach außen verlaufend ausgebildet ist.

9. Dosiervorrichtung nach Anspruch 8,
dadurch gekennzeichnet, daß
der Rand (15) des Außenringes (14) nach außen hin umgebördelt ist.

10. Dosiervorrichtung nach Anspruch 8 oder 9,
dadurch gekennzeichnet, daß
im Umfangspalt (16) Hilfsmitnehmer (17) vorgesehen sind, wobei die Entleerungsöffnung (7) in radialer Richtung über den Außenrand (14) hinausragt und mit dem Umfangspalt (16) in Verbindung steht.

11. Dosiervorrichtung nach einem der Ansprüche 1 bis 10,
dadurch gekennzeichnet, daß
am unteren Ende des Zuführstutzens (12) ein Endstück (30), insbesondere aus Gummi vorgesehen ist, das sich bis zu der Umlaufebene der Mitnehmerstege (11) erstreckt.

12. Dosiervorrichtung nach einem der Ansprüche 1 bis 11,
dadurch gekennzeichnet, daß
die Teilhöhe (h) der Mitnehmerstege (11) etwa 20 % der Innenhöhe (H) des Gehäuses (4) beträgt.

13. Dosiervorrichtung nach einem der Ansprüche 1 bis 12,
dadurch gekennzeichnet, daß
der Rotor (3) eine nahezu die Innenhöhe (H) des Gehäuses (4) aufweisende Rotornaben-Abdeckung (27) besitzt, die mit geringem Spiel am Zuführstutzen (12) vorbeigeführt ist.

## Claims

1. A dosing device (1) for the continuous, gravimetric dosing of pourable material, wherein a material flow is conveyed via a measuring section by means of a rotor (3) rotated about a vertical axis of rotation, while detecting the instantaneous load, and the rotor (3) provided with entrainment ribs (11) of an essentially radial and star-shaped form rotates at a charging opening (5) and a peripherally staggered discharge outlet (7) in a housing (4) comprising a hopper (12), and comprising a force measuring device (10) detecting the instantaneous load of the material flow conveyed through the rotor (3), with said housing (4) mounted on a pivot (8) supporting on said stationary force measuring device (10),
characterized in that
the entrainment ribs (11) of the rotor (3) merely take a partial height (h) of the housing (4), and the hopper (12) protrudes into said housing (4) in a direction toward said entrainment ribs (11).

2. The dosing device of claim 1, characterized in that said hopper (12) with its half facing an opposite feed direction (a) extends down to the orbital plane of said entrainment ribs (11), whilst being provided with a discharge opening (13) at its half facing said feed direction (a).

3. The dosing device of either claim 1 or claim 2, characterized in that a peripheral ring (14) is connected to radial outer ends of said entrainment ribs (11).

4. The dosing device of claim 3, characterized in that said peripheral ring (14) is of only the partial height (h) of said entrainment ribs (11).

5. The dosing device of claim 3, characterized in that said peripheral ring (14) is higher than said entrainment ribs (11).

6. The dosing device of claim 5, characterized in that said peripheral ring (14) is of nearly the inner height (H) of said housing (4).

7. The dosing device of any of claims 3 to 6, characterized in that said peripheral ring (14) is run along said hopper (12) with a slight clearance.

8. The dosing device of any of claims 3 to 7, characterized in that said peripheral ring (14) forming a circumferential gap (16) has a slightly smaller diameter than that of said housing (4), and that an upper rim (15) is formed to extend to an outward direction to cover said circumferential gap (16).

9. The dosing device of claim 8, characterized in that said rim (15) of said peripheral ring (14) is flanged to the outside.

10. The dosing device of either claim 8 or claim 9, characterized in that assistant cams (17) are provided in said circumferential gap (16), wherein said discharge outlet (7) projects beyond said outer border (14) in a radial direction and is in communication with said circumferential gap (16).

11. The dosing device of any of claims 1 to 10, characterized in that an end portion (30), in particular made from " rubber, is provided at the bottom end of said hopper (12) and extends right to the orbital plane of said entrainment ribs (11).

12. The dosing device of any of claims 1 to 11, characterized in that the partial height (h) of said entrainment ribs (11) is about 20 % of the inner height (H) of said housing (4).

13. The dosing device of any of claims 1 to 12, characterized in that said rotor (3) includes an armature hub cover (27) which is of nearly the inner height (H) of said housing (4) and is run past said hopper (12) with a slight clearance.

## Revendications

1. Dispositif de dosage (1) pour le dosage gravimétrique en continu de matériau en vrac, un flux de matériau étant transporté sur une section de mesure, en déterminant la charge instantanée, par un rotor (3) entraîné autour d'un axe de rotation vertical, et le rotor (3), pourvu de nervures entraîneuses (11) configurées en s'étendant essentiellement radialement et en étoile, tournant dans un carter (4) pourvu d'une tubulure d'alimentation (12) à une ouverture de chargement (5) et d'une ouverture de vidage (7) disposée en décalage sur la périphérie, et avec un dispositif dynamométrique (10) qui enregistre la charge instantanée du flux de matériau guidé au moyen du rotor (3), par le fait que le carter (4), monté sur un axe de pivotement (8), s'appuie sur le dispositif dynamométrique (10) disposé stationnairement,
**caractérisé** en ce que les nervures entraîneuses (11) du rotor (3) n'occupent qu'une hauteur partielle (h) du carter (4), et la tubulure d'alimentation (12) s'enfonce dans le carter (4) en direction des nervures entraîneuses (11).

2. Dispositif de dosage selon la revendication 1, **caractérisé** en ce que la tubulure d'alimentation (12) s'étend, par sa moitié dirigée à l'encontre de la direction de transport (a), jusqu'au plan de circulation des nervures entraîneuses (11), tandis qu'une ouverture de sortie (13) est prévue sur sa moitié dirigée dans la direction de transport (a).

3. Dispositif de dosage selon la revendication 1 ou 2, **caractérisé** en ce que les nervures entraîneuses (11) sont reliées à une bague extérieure (14) à leurs extrémités radialement extérieures.

4. Dispositif de dosage selon la revendication 3, **caractérisé** en ce que la bague extérieure (14) présente seulement la hauteur partielle (h) des nervures entraîneuses (11).

5. Dispositif de dosage selon la revendication 3, **caractérisé** en ce que la bague extérieure (14) est plus haute que les nervures entraîneuses (11).

6. Dispositif de dosage selon la revendication 5, **caractérisé** en ce que la bague extérieure (14) présente presque la hauteur intérieure (H) du carter (4).

7. Dispositif de dosage selon une des revendications 3 à 6, **caractérisé** en ce que la bague extérieure (14) passe avec un faible jeu devant la tubulure d'alimentation (12).

8. Dispositif de dosage selon une des revendications 3 à 7, **caractérisé** en ce que la bague extérieure (14) présente, en formant une fente périphérique (16), un diamètre légèrement inférieur au diamètre du carter (4), et le bord supérieur (15) est configuré en s'étendant vers l'extérieur afin de recouvrir la fente périphérique (16).

9. Dispositif de dosage selon la revendication 8, **caractérisé** en ce que le bord (15) de la bague extérieure (14) est rabattu vers l'extérieur.

10. Dispositif de dosage selon la revendication 8 ou 9, **caractérisé** en ce que des entraîneurs auxiliaires (17) sont prévus dans la fente périphérique (16), l'ouverture de vidage (7) dépassant de la bague extérieure (14) en direction radiale et étant reliée à la fente périphérique (16).

11. Dispositif de dosage selon une des revendications 1 à 10, **caractérisé** en ce qu'un embout (30), notamment en caoutchouc, est prévu à l'extrémité inférieure de la tubulure d'alimentation (12), embout qui s'étend jusqu'au plan de circulation des nervures entraîneuses (11).

12. Dispositif de dosage selon une des revendications 1 à 11, **caractérisé** en ce que la hauteur partielle (h) des nervures entraîneuses (11) est égale à environ 20 % de la hauteur intérieure (H) du carter (4).

13. Dispositif de dosage selon une des revendications 1 à 12, **caractérisé** en ce que le rotor (3) possède un recouvrement de moyeu de rotor (27), qui présente presque la hauteur intérieure (H) du carter (4) et qui passe avec un faible jeu devant la tubulure d'alimentation (12).
